# EUROPEAN PATENT SPECIFICATION

(11) **EP 3 643 530 B1**
(45) Date of publication and mention of the grant of the patent: **08.03.2023**
(21) Application number: 18820415.0
(22) Date of filing: 22.05.2018
(51) Int. Cl.: B60C 15/04, B29D 30/48

(54) **BEAD CORE, PRODUCTION METHOD THEREFOR, AND PNEUMATIC TIRE**
WULSTKERN, HERSTELLUNGSVERFAHREN DAFÜR UND LUFTREIFEN
TRINGLE, SON PROCÉDÉ DE PRODUCTION ET BANDAGE PNEUMATIQUE

(30) Priority: 19.06.2017 JP 2017119964
(43) Date of publication of application: 29.04.2020
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Marks & Clerk LLP
(86) International application number: PCT/JP2018/019712
(87) International publication number: WO 2018/235503

(56) References cited:
- EP-A1- 1 449 680
- EP-A1- 2 826 641
- WO-A1-2013/089111
- WO-A1-2017/061292
- JP-A- S 551 201
- JP-A- S6 325 111
- JP-A- S59 145 130
- JP-A- 2008 528 346
- JP-A- 2011 131 866
- JP-A- 2013 147 051
- JP-A- 2016 088 259
- US-A1- 2013 146 201

## Description

### TECHNICAL FIELD

The present invention relates to a bead core, a manufacturing method of the same, and a pneumatic tire.

### BACKGROUND

Heretofore, a bead core comprising a bead wire coated with a coating resin has been suggested for a purpose of, for example, weight reduction of a member of a pneumatic tire (e.g., see PTL 1). In such a bead core, to decrease a winding count of the bead wire and thereby improve productivity, it is suggested that a strip member comprising one or more bead wires coated with a coating resin such as a thermoplastic resin is wound only in a stack direction and stacked to form an annular member. In this bead core, adjacent stacks of coating resins can be joined to each other, for example, by welding or bonding.

### CITATION LIST

### Patent Literature

PTL 1: Japanese Patent Laid-Open No. 2011-207157. Attention is also drawn to the disclosures of JP S55 1201, JP2013 147051, EP 1 449 680, JP 2016 088259 and EP 2 826 641.

### SUMMARY

### (Technical Problem)

However, in the above technology, especially in a case where a stacked annular member is formed, there is concern that, for example, when a force such as a large lateral force acts on a tire, an interface of a coating resin between adjacent stacks peels off. Consequently, there is room for improvement of durability of a bead core in which a strip member coated with a coating resin is wound and stacked in a stack direction.

To solve the problem, it is an object of the present invention to provide a bead core having a high durability, a pneumatic tire including the bead core in a bead portion, and a manufacturing method of the bead core by which such a bead core is obtainable.

### (Solution to Problem)

A bead core according to claim 1 comprises
an annular body in which a strip member comprising one or more bead wires coated with a coating resin is wound and stacked, wherein in an axial cross section of the annular body, an interface between stacks adjacent to each other is non-linear.

A manufacturing method of a bead core according to claim 3 comprises an annular body forming step of winding and stacking a strip member comprising one or more bead wires coated with a coating resin to form an annular body, wherein the strip member has an upper side and a lower side in a cross section orthogonal to an extending direction of the strip member, and the upper side and the lower side are non-linear in the cross section.

A pneumatic tire according to claim 5 comprises a bead portion, and comprises the above bead core in the bead portion.

### (Advantageous Effect)

According to the present invention, there can be provided a bead core having a high durability, a pneumatic tire including a bead core in a bead portion, and a manufacturing method of the bead core by which such a bead core is obtainable.

### BRIEF DESCRIPTION OF THE DRAWINGS

In the accompanying drawings:
FIG. 1 is an axial cross-sectional view of an annular body that forms a bead core according to an embodiment of the present invention;
FIG. 2 is a schematic side view of the bead core according to the present invention;
FIG. 3 is an axial cross-sectional view of an annular body that forms a bead core according to another embodiment of the present invention;
FIG. 4 is an axial cross-sectional view of an annular body that forms a bead core according to still another embodiment of the present invention; and
FIG. 5 is a tire widthwise partially cross-sectional view of a pneumatic tire including the bead core according to the present invention in a bead portion.

### DETAILED DESCRIPTION

Hereinafter, embodiments of the present invention will be illustrated and described in detail with reference to the drawings.

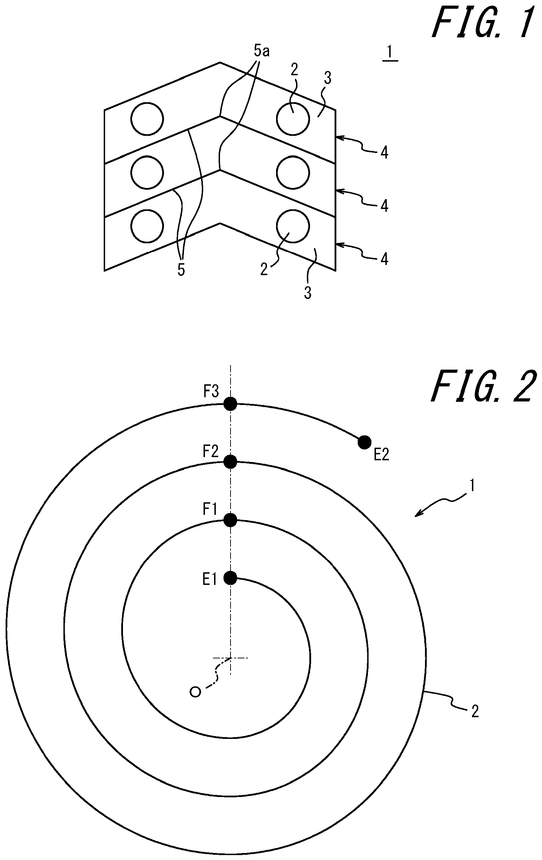

FIG. 1 is an axial cross-sectional view of an annular body that forms a bead core according to an embodiment of the present invention. . In the present embodiment, this bead core 1 is configured as an annular body in which a strip member 4 comprising one or more (in an illustrated example, two) bead wires 2 coated with a coating resin 3 is wound and stacked (three stacks in this cross section).

In this example, the number of the bead wires 2 to be arranged in an axial direction of the annular body is two in one stack of strip member 4, but the present disclosure is not especially limited to this case. The number of the bead wires 2 may be one or more. Furthermore, in the illustrated example, the annular body has a configuration in which three stacks are stacked in this cross section, but two or more stacks may be stacked.

In the bead wire 2, an arbitrary known material can be used, and, for example, a steel cord can be used. The steel cord can comprise, for example, a steel monofilament or stranded wire. Furthermore, in the bead wire 2, organic fibers, carbon fibers or the like may be used.

Additionally, in a coating resin 3, for example, a thermoplastic elastomer or a thermoplastic resin can be used, or a resin that crosslinks by heat or an electron beam or a resin that cures by thermal dislocation can be used. Examples of the thermoplastic elastomer include polyolefin thermoplastic elastomer (TPO), polystyrene thermoplastic elastomer (TPS), polyamide thermoplastic elastomer (TPA), polyurethane thermoplastic elastomer (TPU), polyester thermoplastic elastomer (TPC), and dynamic crosslinking thermoplastic elastomer (TPV). Furthermore, examples of the thermoplastic resin include polyurethane resin, polyolefin resin, vinyl chloride resin, and polyamide resin. Furthermore, as the thermoplastic resin, a resin can be used in which, for example, a deflection temperature under load (under a load of 0.45 MPa) prescribed in ISO75-2 or ASTM D648 is 78°C or more, a tensile yield strength prescribed in JIS K7113 is 10 MPa or more, a tensile rupture elongation (JIS K7113) similarly prescribed in JIS K7113 is 50% or more, and Vicat softening temperature (A-method) prescribed in JIS K7206 is 130°C or more. It is preferable that the coating resin 3 that coats the bead wire 2 has a tensile elastic modulus (prescribed in JIS K7113: 1995) of 50 MPa or more. Furthermore, it is preferable that the tensile elastic modulus of the coating resin 3 that coats the bead wire 2 is 1000 MPa or less. Note that the coating resin 3 mentioned herein does not contain a rubber (an organic polymer material that exhibits a rubber elasticity at normal temperature).

In the bead core 1 of the present embodiment, for example, mutual stacks have a state where the strip member 4 is wound while melting the coating resin 3 by hot plate welding or the like, and the molten coating resin 3 is solidified and joined. Alternatively, the stacks may be bonded and joined to each other with an adhesive or the like.

FIG. 2 is a schematic side view of the bead core according to the embodiment of the present invention. FIG. 2 only illustrates the bead wire 2 for simplicity (FIG. 2 illustrates a center line of the bead wire 2), and omits depiction of the coating resin 3. As illustrated in FIG. 2, the bead wire 2 is spirally wound from a winding start end E1 about an axis O of the annular body in this cross-sectional view. F1, F2 and F3 indicate orbital positions, and in this example, a winding end edge E2 extends beyond at least a point F3. Therefore, when seen in an arbitrary radial position, three stacks or more of the bead wires 2 are stacked in this example. There are not any special restrictions on a length (an overlap length) of the bead wire from the orbital position (in this example, the point F3) located closest to a winding end edge E2 side to the winding end edge (in this example, a point E2). For example, the length can be from 1/200 to 199/200 of an orbital distance from a point F2 to the point F3. When the length is 1/200 or more of the orbital distance, an area where the coating resins come in contact with each other can increase between the bead wires 2 adjacent in a radial direction (a stack direction). Consequently, for example, adhesiveness or a welding force can be increased, and a tensile burden can be decreased. On the other hand, when the length is 199/200 or less of the orbital distance, the bead core can have a reduced weight. For similar reasons, the overlap length is preferably from 1/100 to 2/3 of the orbital distance from the point F2 to the point F3, and more preferably from 1/50 to 1/3 of the orbital distance from the point F2 to the point F3.

In the present embodiment, the strip member 4 comprising one or more bead wires 2 coated with the coating resin 3 is wound and stacked to form the annular body (an annular body forming step). In the present embodiment, the strip member 4 is formed by coating an outer peripheral side of the bead wire 2 with the molten coating resin 3, and cooling and solidifying the resin. Furthermore, the annular body that forms the bead core 1 can be formed by winding and stacking the strip member 4, and the stacks can be joined to each other, for example, by winding the strip member 4 while melting the coating resin 3 by the hot plate welding or the like, and solidifying the molten coating resin 3. Alternatively, the stacks can be joined by bonding the stacks to each other with the adhesive or the like.

In the bead core 1 of the present embodiment, in an axial cross section of the annular body, an interface between stacks adjacent to each other is non-linear. Specifically, as illustrated in FIG. 1, in the axial cross section of the annular body, a non-linear interface 5 has an apex 5a in a central portion (a center and a peripheral portion around the center, the center in the illustrated example) of the annular body in the axial direction, and is inclined linearly in this example from the apex 5a toward both ends of the annular body in the axial direction and to one side of the annular body in a radial direction (inside in the radial direction in this example). Further specifically, the strip member 4 has an upper side and a lower side in this cross section, and the upper side and the lower side are non-linear in the cross section. Each of the upper side and the lower side has an apex in a central portion (a center and a peripheral portion around the center, the center in the illustrated example) of the strip member 4 in a width direction, and is inclined linearly in this example from the apex toward both ends of the strip member 4 in the width direction and to one side of the strip member 4 in a thickness direction (illustrated downside in the thickness direction in this example). Note that the strip member 4 has a cross-sectional shape formed in a desired shape using, for example, an extruder.

Hereinafter, description will be made as to operations and effects of the present embodiment.

In the bead core 1 of the present embodiment, as described above, in the axial cross section of the annular body, the interface between the stacks adjacent to each other is non-linear. Consequently, as compared with a case where the interface is linear, a joined area between the stacks is larger, and a joining force between the stacks is higher.

Therefore, also in a case where a force such as a large lateral force acts on the tire and shearing deformation occurs in the bead core 1, the bead core 1 is hard to collapse, and durability of the bead core 1 can improve.

Furthermore, according to the present embodiment, in the axial cross section of the annular body, the non-linear interface 5 has the apex 5a in the central portion of the annular body in the axial direction, and is inclined from the apex 5a toward both the ends of the annular body in the axial direction and to the one side of the annular body in the radial direction, especially to inside in the radial direction. Therefore, as compared with the case where the interface is linear, a cross-sectional secondary moment is larger. Due to an extracting force of the carcass under a tire load, the bead core 1 receives a rotating force. However, the bead core has a large cross-sectional secondary moment, has the inclination in a direction that hinders rotation, and is therefore hard to rotate. This can improve the durability of the bead core 1.

As above, the bead core of the present embodiment can have the improved durability.

Furthermore, such nonlinearity can improve a positioning accuracy during manufacturing and stabilize quality.

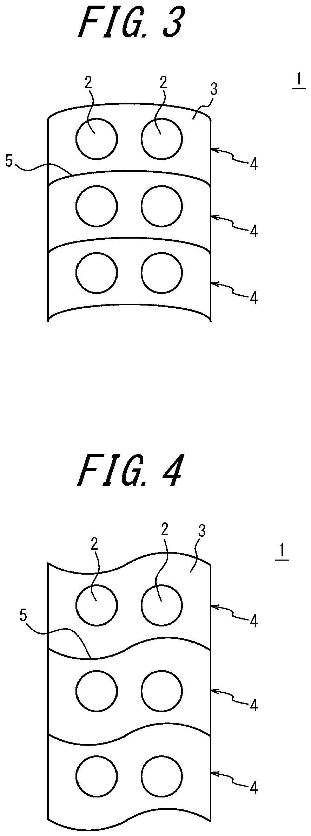

FIG. 3 is an axial cross-sectional view of an annular body that forms a bead core according to another embodiment of the present disclosure. Also in an example illustrated in FIG. 3, in an axial cross section of the annular body, an interface 5 between stacks adjacent to each other is non-linear, but the interface has a shape different from that of the example illustrated in FIG. 1. Specifically, as illustrated in FIG. 3, in the axial cross section of the annular body, the non-linear interface 5 has a shape that is curved to have a center of curvature on one side of the annular body in a radial direction (inside in the radial direction in this example). Further specifically, a strip member 4 has an upper side and a lower side in this cross section, and the upper side and the lower side are non-linear in this cross section. The upper side and lower side of the strip member 4 have a shape that is curved to have a center of curvature on one side of the strip member 4 in a thickness direction (illustrated downside in the thickness direction in this example).

Also in the other embodiment illustrated in FIG. 3, as compared with a case where the interface is linear, a joined area between the stacks is larger, and a joining force between the stacks is higher. Furthermore, as compared with the case where the interface is linear, a cross-sectional secondary moment is larger. Therefore, durability of a bead core 1 can improve.

FIG. 4 is an axial cross-sectional view of an annular body that forms a bead core according to still another embodiment of the present invention. Also in an example illustrated in FIG. 4, in an axial cross section of the annular body, an interface 5 between stacks adjacent to each other is non-linear, but the interface has a shape different from that of the example illustrated in FIG. 1 or FIG. 3. Specifically, as illustrated in FIG. 4, in the axial cross section of the annular body, the non-linear interface 5 has a shape that is curved to have a center of curvature on one side of the annular body in a radial direction (inside in the radial direction in this example) in a half portion of the annular body on one side in an axial direction, and has a shape that is curved to have a center of curvature on the other side of the annular body in the radial direction (outside in the radial direction in this example) in another half portion of the annular body on the other side in the axial direction. Further specifically, a strip member 4 has an upper side and a lower side in this cross section, and the upper side and the lower side are non-linear in this cross section. The upper side and lower side of the strip member 4 have a shape that is curved to have a center of curvature on one side of the strip member 4 in a thickness direction (illustrated downside in the thickness direction in this example) in a half portion of the strip member 4 on one side in a width direction, and have a shape that is curved to have a center of curvature on the other side of the strip member 4 in the thickness direction (illustrated upside in the thickness direction in this example) in another half portion of the strip member 4 on the other side in the width direction.

Also in the other embodiment illustrated in FIG. 4, as compared with a case where the interface is linear, a joined area between the stacks is larger, and a joining force between the stacks is higher. Therefore, durability of a bead core 1 can improve.

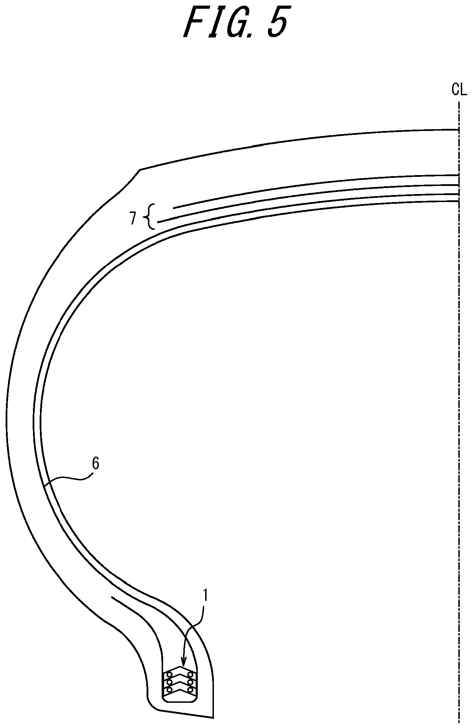

FIG. 5 is a tire widthwise partially cross-sectional view of a pneumatic tire including the bead core according to the embodiment of the present invention in a bead portion. FIG. 5 only illustrates a tire widthwise half portion via a tire equatorial plane CL as a boundary, and another non-illustrated half portion also has a similar configuration. As an example, as illustrated in FIG. 5, the pneumatic tire comprises the bead core 1 according to the embodiment of the present invention embedded in each of a pair of bead portions, and includes a belt 7 comprising two belt layers in the illustrated example on an outer side of a carcass 6 that toroidally straddles the bead core 1, in a tire radial direction.

As above, the embodiments of the present invention have been described, but the present invention is not limited the above embodiments.
For example, as a modification of the example illustrated in FIG. 1, in the axial cross section of the annular body, the non-linear interface 5 may have the apex 5a in the central portion of the annular body in the axial direction, and may be inclined from the apex 5a toward both ends of the bead core 1 in the axial direction and (e.g., linearly) to the other side of the annular body in the axial direction (outside in the axial direction). Furthermore, in the example illustrated in FIG. 1, in the axial cross section of the annular body, the interface 5 has a substantially symmetric shape centered about the apex 5a in the axial direction of the annular body, but may be asymmetric. Furthermore, as a modification of the example illustrated in FIG. 3, in the axial cross section of the annular body, the non-linear interface 5 may have a shape that is curved to have a center of curvature on the other side of the annular body in the radial direction (outside in the radial direction). Additionally, in the example illustrated in FIG. 3, the curvature of the curved shape is substantially constant, and the curvature may change. In addition, as a modification of the example illustrated in FIG. 4, in the axial cross section of the annular body, the non-linear interface 5 may have a shape that is curved to have the center of curvature on the other side of the annular body in the stack direction (outside in the radial direction) in the half portion of the annular body on one side in the axial direction, and curved to have the center of curvature on one side of the annular body in the stack direction (inside in the radial direction) in the half portion of the annular body on the other side in the axial direction.

Furthermore, in the axial cross section of the annular body, the non-linear interface 5 may have various shapes such as a zigzag shape and a wavy shape (also including a rectangular wavy shape). Additionally, in the present invention, , a circumference of the annular body may further comprise a bead core coated with a coating resin.

Additionally, it is preferable that the upper side and the lower side have shapes that come in contact closely with each other in a case where the interface between the stacks adjacent to each other is superimposed on another interface. In such forming as described above, manufacturing is possible without generating any gap during the joining by the heat welding or the like, so that a joining strength can further increase. Furthermore, a positioning accuracy during the stacking increases, and variation in the manufacturing is therefore hard to be generated, so that quality improves.

### REFERENCE SIGNS LIST

- 1: bead core
- 2: bead wire
- 3: coating resin
- 4: strip member
- 5: interface
- 5a: apex
- 6: carcass
- 7: belt

## Claims

1. A bead core (1) comprising an annular body in which a strip member (4) comprising one or more bead wires (2) coated with a coating resin (3) is wound and stacked, wherein in an axial cross section of the annular body, an interface (5) between stacks adjacent to each other is non-linear, and wherein the coating resin is formed of a thermoplastic resin or a thermoplastic elastomer.

2. The bead core (1) according to claim 1, wherein in the axial cross section of the annular body, the non-linear interface (5) has an apex (5a) in a central portion of the annular body in an axial direction, and is inclined from the apex (5a) toward both ends of the annular body in the axial direction and to one side of the annular body in a radial direction.

3. A manufacturing method of a bead core (1), comprising an annular body forming step of winding and stacking a strip member (4) comprising one or more bead wires (2) coated with a coating resin to form an annular body, wherein the strip member (4) has an upper side and a lower side in a cross section orthogonal to an extending direction of the strip member (4), and the upper side and the lower side are non-linear in the cross section, and wherein the coating resin is formed of a thermoplastic resin or a thermoplastic elastomer.

4. The manufacturing method of the bead core (1) according to claim 3, wherein in the cross section, each of the upper side and the lower side has an apex (5a) in a central portion of the strip member (4) in a width direction, and is inclined from the apex (5a) toward both ends of the strip member (4) in the width direction and to one side of the strip member (4) in a thickness direction.

5. A pneumatic tire comprising a pair of bead portions, and comprising the bead core (1) according to claim 1 or 2 in each of the bead portions.

## Patentansprüche

1. Wulstkern (1), der einen ringförmigen Körper umfasst, in dem ein Streifenelement (4) gewickelt und gestapelt ist, das einen oder mehrere Wulstdrähte (2) umfasst, die mit einem Überzugsharz (3) überzogen sind, wobei in einem axialen Querschnitt des ringförmigen Körpers eine Grenzfläche (5) zwischen zueinander benachbarten Stapeln nicht-linear ist und wobei das Überzugsharz aus einem thermoplastischen Harz oder einem thermoplastischen Elastomer gebildet ist.

2. Wulstkern (1) nach Anspruch 1, wobei in dem axialen Querschnitt des ringförmigen Körpers die nicht-lineare Grenzfläche (5) einen Scheitel (5a) in einem in einer axialen Richtung mittigen Abschnitt des ringförmigen Körpers aufweist und von dem Scheitel (5a) hin zu beiden Enden des ringförmigen Körpers in der axialen Richtung und zu einer Seite des ringförmigen Körpers in einer radialen Richtung geneigt ist.

3. Verfahren zur Fertigung eines Wulstkerns (1), das einen Schritt zum Bilden eines ringförmigen Körpers umfasst, bei dem ein Streifenelement (4) gewickelt und gestapelt wird, das einen oder mehrere Wulstdrähte (2), die mit einem Überzugsharz überzogen sind, umfasst, um einen ringförmigen Körper zu bilden, wobei das Streifenelement (4) in einem Querschnitt, senkrecht zu einer Ausdehnungsrichtung des Streifenelements (4), eine obere Seite und eine untere Seite aufweist und die obere Seite und die untere Seite in dem Querschnitt nicht-linear sind und wobei das Überzugsharz aus einem thermoplastischen Harz oder einem thermoplastischen Elastomer gebildet ist.

4. Verfahren zur Fertigung eines Wulstkerns (1) nach Anspruch 3, wobei in dem Querschnitt sowohl die obere Seite als auch die untere Seite einen Scheitel (5a) in einem in einer Breitenrichtung mittigen Abschnitt des Streifenelements (4) aufweist und von dem Scheitel (5a) hin zu beiden Enden des Streifenelements (4) in der Breitenrichtung und zu einer Seite des Streifenelements (4) in einer Dickenrichtung geneigt ist.

5. Luftreifen, der ein Paar von Wulstabschnitten umfasst und den Wulstkern (1) nach Anspruch 1 oder 2 in jedem der Wulstabschnitte umfasst.

## Revendications

1. Tringle (1), comprenant un corps annulaire, dans laquelle un élément de bande (4) comprenant un ou plusieurs fils de tringle (2) revêtus d'une résine de revêtement (3) est enroulé et empilé, dans laquelle, dans une section transversale axiale du corps annulaire, une interface (5) entre des empilements adjacents les uns aux autres est non linéaire, et dans laquelle la résine de revêtement est formée à partir d'une résine thermoplastique ou d'un élastomère thermoplastique.

2. Tringle (1) selon la revendication 1, dans laquelle, dans la section transversale axiale du corps annulaire, l'interface non linéaire (5) comporte un sommet (5a) dans une partie centrale du corps annulaire, dans une direction axiale, et est inclinée du sommet (5a) vers les deux extrémités du corps annulaire, dans la direction axiale, et vers un côté du corps annulaire, dans une direction radiale.

3. Procédé de fabrication d'une tringle (1), comprenant une étape de formation du corps annulaire, consistant à enrouler et empiler un élément de bande (4), comprenant un ou plusieurs fils de tringle (2) revêtus d'une résine de revêtement, pour former un corps annulaire, dans lequel l'élément de bande (4) comporte un côté supérieur et un côté inférieur dans une section transversale orthogonale à une direction d'extension de l'élément de bande (4), et le côté supérieur et le côté inférieur sont non linéaires dans la section transversale, et dans lequel la résine de revêtement est formée à partir d'une résine thermoplastique ou d'un élastomère thermoplastique.

4. Procédé de fabrication de la tringle (1) selon la revendication 3, dans lequel, dans la section transversale, chacun du côté supérieur et du côté inférieur comporte un sommet (5a) dans une partie centrale de l'élément de bande (4), dans une direction de la largeur, et est incliné du sommet (5a) vers les deux extrémités de l'élément de bande (4), dans la direction de la largeur, et vers un côté de l'élément de bande (4), dans une direction de l'épaisseur.

5. Bandage pneumatique, comprenant une paire de parties de talon et comprenant la tringle (1) selon la revendication 1 ou 2 dans chacune des parties de talon.
